# EUROPÄISCHE PATENTSCHRIFT

(11) **EP 0 483 459 B1**
(45) Veröffentlichungstag und Bekanntmachung des Hinweises auf die Patenterteilung: **06.09.1995**
(21) Anmeldenummer: 91112378.4
(22) Anmeldetag: 24.07.1991
(51) Int. Cl.: C07F 9/10, A61K 31/66

(54) **Verfahren zur Herstellung von Phosphatidylcholinderivaten**
Process for preparation of phosphatidylcholine derivatives
Procédé de préparation de dérivés de phosphatidylcholine

(30) Priorität: 31.10.1990 DE 4034585; 14.12.1990 DE 4039996
(43) Veröffentlichungstag der Anmeldung: 06.05.1992
(73) Patentinhaber: A. Nattermann & Cie. GmbH, D-50829 Köln (DE)
(72) Erfinder: Schäfer, Thomas Dr., W-5303 Bornheim (DE)
(74) Vertreter: Döring, Wolfgang, Dr.-Ing. Patentanwälte Hauck, Graalfs, Wehnert, Döring, Siemons

(56) Entgegenhaltungen:
- EP-A- 0 350 672
- PATENT ABSTRACTS OF JAPAN, Band 13, Nr. 447 (C-642)[3795], 6. Oktober 1989; & JP-A-1 172 395 (NIPPON OIL & FATS CO., LTD) 07-07-1989
- BIOCHIMICA ET BIOPHYSICA ACTA, vol. 187, 1969, pages 520-526; Elsevier Publishing Co., Amsterdam, NL; E. CUBERO ROBLES et al.: "Synthesis of lecithins by acylation of O-(sn-glycero-3-phosphoryl) choline with fatty acid anhydrides"

## Beschreibung

Die vorliegende Erfindung betrifft ein Verfahren zur Herstellung von Phosphatidylcholinderivaten mit den Merkmalen des Oberbegriffs des Patentanspruchs 1.

Für Phosphatidylcholinderivate besteht eine Reihe von Anwendungsmöglichkeiten. So ist es beispielsweise bekannt, Dipalmitoylphosphatidylcholin als Lungensurfactant für die Verbesserung der Atmungsfunktionen einzusetzen (Kobayashi et al, J. of Jap. Med. Soc. Biol. Interface 14, 59 (1983)). Weiterhin wird Dilinoleoylphosphatidylcholin für die Behandlung von lipidischen Störungen in der Leber verwendet (New Drugs in Japan, Vol. 20, p. 179). Andere Phosphatidylcholinderivate eignen sich hervorragend für pharmazeutische oder kosmetische Zwecke sowie für die Herstellung von Liposomen und Phospholipidlösungen.

Um diese oder andere Phosphatidylcholinderivate herzustellen, steht eine Reihe von Acylierungsverfahren zur Verfügung.

So beschreibt eine Publikation in Can. J. Biochem. Physiol. 37, 953 (1959) die Acylierung mit Fettsäurechloriden in Anwesenheit eines basischen Katalysators, wie etwa Pyridin. Hierbei muß jedoch der Katalysator nach erfolgter Reaktion wieder aus dem Gemisch entfernt werden, wozu Ionenaustauscher oder ähnliche aufwendige Verfahren angewendet werden. Auch sind bei diesem Verfahren keine hohen Ausbeuten an Phosphatidylcholinderivaten zu erwarten.

Ähnlich aufwendig ist die Acylierung mit 1-Acylimidazol gemäß der US-PS 41 30 571. Hierbei umfaßt dieses Verfahren mehrere Reaktionsschritte, wodurch eine entsprechend lange Reaktionsdauer und geringe Ausbeuten resultieren. Ebenfalls muß bei diesem bekannten Verfahren das 1-Acylimidazol aus dem Reaktionsgemisch wieder aufwendig entfernt werden, was nicht immer restlos gelingt.

Bei der lösungsmittelfreien Acylierung von Glycerophosphatidylcholin nach Robles et al. (Biochim. Biophys. Acta, 187, 520 (1969)) ist sowohl die Anwesenheit eines Fettsäureanhydrids als auch die Anwesenheit des korrespondierenden Fettsäuresalzes erforderlich, um hier zu einer reproduzierbaren Umsetzung zu gelangen. Wegen des fehlenden Lösungsmittels und der hierauf zurückzuführenden hohen Viskosität ist das entsprechende Reaktionssystem nur schwer zu handhaben, wodurch lange Reaktionszeiten und geringe Ausbeuten erklärlich werden.

Bei dem aus der US-PS 46 90 784 bekannten Verfahren wird die Acylierung von Glycerophosphatidylcholin mittels Fettsäureanhydriden in Gegenwart von 4-Dimethylaminopyridin oder Pyrrolidinopyridin als Esterifizierungskatalysator vorzugsweise in Methanol durchgeführt. Ein ähnliches Verfahren beschreibt die japanische Patentanmeldung JP-61 275 286, wobei hier die entsprechenden Phosphatidylcholinderivate bei Raumtemperatur mit extrem geringen Ausbeuten darstellbar sein sollen. Eine Nacharbeitung dieses Verfahrens zeigte jedoch, daß auch nach einer Reaktionszeit von mehreren Tagen keine meßbare Ausbeute an Phosphatidylcholinderivaten resultierte.

Die EP-A 0 344 717 beschreibt ein Verfahren zur Herstellung von Phosphatidylcholinderivaten, bei dem in organischen Lösungsmitteln, wie beispielsweise Chloroform, Malonsäurediester oder Alkanitrile, gearbeitet wird.

Des weiteren ist es bekannt, durch Reaktionen von Fettsäuren mit Schwermetallsalzen des Glycerophosphatidylcholins die entsprechendne Phosphatidylcholinderivate herzustellen (JP-61 275 287A). Hierbei ist jedoch die Anwesenheit eines Carbodiimids unbedingt erforderlich.

Bei dem von Patel in J. Lipid Research 20, 674 (1979) beschriebenen Verfahren arbeitet man mit Cadmiumchloridkomplexen von Glycerophosphatidylcholin, wobei die Acylierung in einem Lösungsmittel unter Anwesenheit von 4-Pyrrolidinopyridin erfolgt.

Ein Verfahren mit den Merkmalen des Oberbegriffs des Patentanspruchs 1 ist in der JP-63 225 358 beschrieben. Hierbei werden u.a. bei dem bekannten Verfahren Fettsäureanhydride und 4-Dimethylaminopyridin als Katalysator und Dimethylsulfoxid als Lösungsmittel eingesetzt, um so zu den gewünschten Phosphatidylcholinderivaten zu gelangen.

Die vorstehend beschriebenen bekannten Verfahren weisen den Nachteil auf, daß sie entweder nur eine schlechte Ausbeute an Phosphatidylcholinderivaten ermöglichen oder einen hohen Aufwand zur Abtrennung der bei der Reaktion eingesetzten und toxischen Lösungsmitteln erfordern.

Der vorliegenden Erfindung liegt daher die Aufgabe zugrunde, ein Verfahren der angegebenen Art zur Verfügung zu stellen, das besonders einfach und mit hoher Ausbeute die Herstellung der Phosphatidylcholinderivate erlaubt.

Diese Aufgabe wird durch ein Verfahren mit dem kennzeichnenden Merkmal des Patentanspruchs 1 gelöst.

Erfindungsgemäß wird somit ein Verfahren zur Herstellung von Phosphatidylcholinderivaten vorgeschlagen, bei dem Glycerophosphatidylcholin unter Anwesenheit eines Pyridin-Katalysators mit mindestens einem Fettsäureanhydrid umgesetzt wird. Hierbei führt man diese Reaktion in einer Schmelze aus Glycerophosphatidylcholin, Fettsäureanhydrid und dem Katalysator durch.

Das erfindungsgemäße Verfahren weist eine Reihe von Vorteilen auf. Überraschend konnte festgestellt werden, daß bei dem erfindungsgemäßen Verfahren, obwohl es in einer Schmelze durchgeführt wird, hohe Ausbeuten an den Phosphatidylcholinderivaten resultieren, die in der Größenordnung zwischen etwa 80% und etwa 98% der theoretisch berechneten Ausbeuten liegen. Auch kann bei dem erfindungsgemäßen Verfahren im Gegensatz zu den vorstehend abgehandelten bekannten Verfahren auf eine Abtrennung von toxischen Lösungsmitteln verzichtet werden, da die Umsetzung in der Schmelze durchgeführt wird und somit keine entsprechenden Lösungsmittel anwesend sind. Hierdurch wird die Aufarbeitung der gewünschten Reaktionsprodukte erheblich vereinfacht, so daß das erfindungsgemäße Verfahren besonders wirtschaftlich durchführbar ist. Weiterhin konnte festgestellt werden, daß die unerwünschte Bildung von solchen Derivaten, die in β-Stellung die -PO₄-R-Gruppe aufweisen, beim erfindungsgemäßen Verfahren völlig oder nahezu völlig ausgeschlossen ist.

Grundsätzlich richtet sich bei dem erfindungsgemäßen Verfahren die Temperatur, bei der die Reaktion von Glycerophosphatidylcholin mit dem mindestens einen Fettsäureanhydrid durchgeführt wird, nach dem Schmelzpunkt des Glycerophosphatidylcholin und insbesondere des jeweils eingesetzten Fettsäureanhydrides bzw. der jeweils eingesetzten Fettsäureanhydride. Üblicherweise variiert die Reaktionstemperatur zwischen 50° C und 120° C, vorzugsweise zwischen 90° C und 110° C.

Die Auswahl der bei dem erfindungsgemäßen Verfahren jeweils eingesetzten Fettsäureanhydride richtet sich nach dem jeweils herzustellenden Phosphatidylcholinderivat. Vorzugsweise werden solche Fettsäureanhydride eingesetzt, die in ihrer Kohlenwasserstoffkette 6 bis 24 Kohlenstoffatome aufweisen, wobei diese Kohlenwasserstoffketten sowohl verzweigt als auch unverzweigt, gesättigt und/oder ungesättigt sein können.

Vorzugsweise werden bei dem erfindungsgemäßen Verfahren die nachfolgend aufgeführten Fettsäureanhydride mit dem Glycerophosphatidylcholin zur Reaktion gebracht:
Hexansäureanhydrid (Capronsäureanhydrid)
Octansäureanhydrid (Caprylsäureanhydrid)
Decansäureanhydrid (Caprylsäureanhydrid)
Dodecansäureanhydrid (Laurinsäureanhydrid)
Tetradecansäureanhydrid (Myristinsäureanhydrid)
Hexadecansäureanhydrid (Palmitinsäureanhydrid)
Octadecansäureanhydrid (Stearinsäureanhydrid)
Eicosansäureanhydrid (Arachinsäureanhydrid)
Behensäureanhydrid (Docosansäureanhydrid)
Tetracosansäureanhydrid (Lignocerinsäureanhydrid)
2-Hexensäureanhydrid
4-Decensäureanhydrid (Obtusilsäureanhydrid)
9-Decensäureanhydrid
4-Dodecensäureanhydrid (Lindersäureanhydrid)
Myristoleinsäureanhydrid
Palmitoleinsäureanhydrid
Ölsäureanhydrid
Linolsäureanhydrid
Linoleinsäureanhydrid
Linolensäureanhydrid
Arachidinsäureanhydrid
Ebenso ist es möglich, bei dem erfindungsgemäßen Verfahren ein Gemisch von Fettsäureanhydriden, insbesondere ein Gemisch der vorstehend aufgeführten Fettsäureanhydride, oder Fettsäuranhydride von Dicarbonsäuren bzw. entsprechende Gemische von Fettsäureanhydriden von Dicarbonsäuren zu verwenden.

Üblicherweise wird als Ausgangsmaterial das im Handel befindliche Glycerophosphatidylcholin der nachfolgenden Formel I 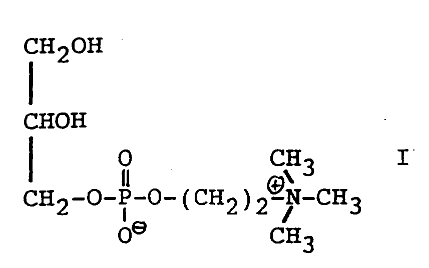
verwendet, wobei als Reaktionsprodukt dann abhängig von dem jeweiligen Fettsäureanhydrid bzw. Fettsäureanhydridgemisch die nachfolgend durch die Formeln II und III wiedergegebenen Phosphatidylcholinderivate resultieren. 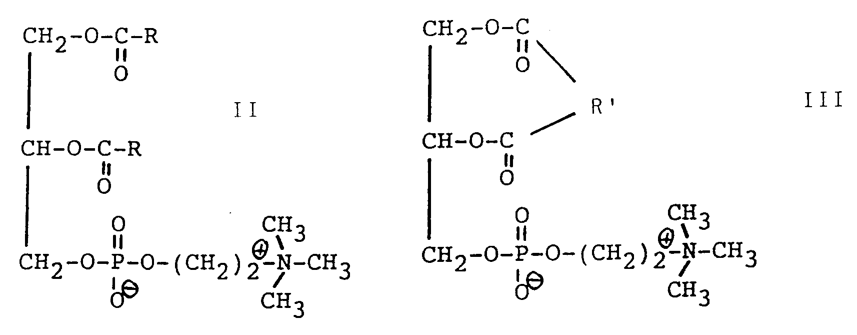
Hier bedeutet R in der Formeln I eine gesättigte oder ungesättigte, gerade oder verzweigte Kohlenwasserstoffkette, vorzugsweise mit 6 bis 24 Kohlenstoffatomen, wobei diese Kohlenwasserstoffkette selbstverständlich auch beispielsweise mit Halogenen, OH-Gruppen oder anderen Substituenten substituiert sein kann.

R' steht in der Formel III für eine gesättigte oder ungesättigte, gerade oder verzweigte Kohlenwasserstoffkette, vorzugsweise mit 6 bis 24 Kohlenstoffatomen, wobei diese Kohlenwasserstoffkette selbstverständlich auch beispielsweise mit Halogen, OH-Gruppen oder anderen Substituenten substituiert sein kann. Selbstverständlich soll die o.a. Formel III auch die entsprechenden Phosphatidylcholinderivate abdecken, die durch Umsetzung von Glycerophosphatidylcholin mit Oxalsäureanhydrid nach dem erfindungsgemäßen Verfahren hergestellt werden.

Ebenso kann die zuvor angesprochene Beschleunigung der Reaktion und die Verbesserung der Ausbeute dadurch erreicht werden, daß das Fettsäureanhydrid, bezogen auf das Glycerophosphatidylcholin, im Überschuß zugegeben wird. Hier konnte festgestellt werden, daß insbesondere dann die Ausbeute der Umsetzung besonders hoch ist, wenn bei der Reaktion ein Massenverhältnis von Fettsäureanhydrid bzw. von Fettsäureanhydridgemisch zu Glycerophosphatidylcholin eingestellt wird, das zwischen 8:1 bis 1,6:1, vorzugsweise zwischen 5,3:1 bis 2,5:1, variiert.

Üblicherweise beträgt bei dem erfindungsgemäßen Verfahren die Reaktionszeit zwischen einer Stunde und zehn Stunden, vorzugsweise zwischen 3 Stunden und 6 Stunden.

Vorzugsweise wird bei dem erfindungsgemäßen Verfahren als Pyridin-Katalysator ein solcher Katalysator eingesetzt, der ein in para-Stellung substituiertes Pyridinderivat aufweist. Hier konnte festgestellt werden, daß gerade diese in para-Stellung substituierten Pyridinderivate die erfindungsgemäße Herstellung der Phosphatidylcholinderivate besonders in bezug auf die Ausbeute und die Reaktionsgeschwindigkeit begünstigen.

Als Pyridinderivate im Sinne der vorstehenden Ausführung kommen insbesondere 4(N,N'-Dialkylamino)-pyridin, vorzugsweise 4-(N,N'-Dimethylamino)-pyridin und/oder 4-(N, N'-Diethylamino)-pyridin, und/oder 4-(1-Pyrrolidinyl)-pyridin in Frage.

Was bei dem erfindungsgemäßen Verfahren das Massenverhältnis von Glycerophosphatidylcholin zum Katalysator anbetrifft, so ist hierzu allgemein festzuhalten, daß dieses Massenverhältnis zwischen 1:3 bis 1:0,1 variieren kann. Insbesondere konnte festgestellt werden, daß bei einem Massenverhältnis von Glycerophosphatidylcholin zum Katalysator von 1:1,5 bis 1:0,75 in entsprechend kurzen Reaktionszeiten hervorragende Ausbeuten erhalten werden.

Um das bei dem erfindungsgemäßen Verfahren hergestellte Phosphatidylcholinderivat nach erfolgter Reaktion aus der Schmelze zu isolieren, wird die Schmelze abgekühlt und das hergestellte Phosphatidylcholin in üblicher Weise abhängig von seinen Eigenschaften, beispielsweise durch partielles Lösen in einem nicht toxischen Lösungsmittel und/oder über chromatographische Verfahren, isoliert.

Das erfindungsgemäße Verfahren wird nachfolgend anhand von vier Ausführungsbeispielen näher erläutert.

### Beispiel 1

### 1,2-Dioctadecanoyl-sn-glycero-3-phosphocholin

In einem Dreihalskolben mit Rührer, Thermometer und Kühler werden 5,1 g Stearinsäureanhydrid, 1 g Glycerophosphatidylcholin und 1,03 g 4-(N, N'-Dimethylamino)-pyridin gegeben. Das Gemisch wird 5 Stunden bei einer Temperatur von 100° C gehalten und nach Abkühlung auf übliche Weise aufgearbeitet. Ausbeute: 2,5 g (81% d. Th.)

### Beispiel 2

### 1,2-Dihexandecanoyl-sn-glycero-3-phosphocholin

In einem Dreihalskolben mit Rührer, Thermometer und Kühler werden 4,2 g Palmitinsäureanhydrid, 1 g Glycerophosphatidylcholin und 0,95 g 4-(N, N'-Dimethylamino)-pyridin gegeben. Das Gemisch wird 4 Stunden bei einer Temperatur von 100° C gehalten und nach Abkühlung auf übliche Weise aufgearbeitet. Ausbeute: 2,5 g (88% d. Th.)

### Beispiel 3

### 1,2-Ditetradecanoyl-sn-glycero-3-phosphocholin

In einem Dreihalskolben mit Rührer, Thermometer und Kühler werden 4 g Myristinssäureanhydrid, 1 g Glycerophosphatidylcholin und 0,95 g 4-(N, N'-Dimethylamino)-pyridin gegeben. Das Gemisch wird 3,5 Stunden bei einer Temperatur von 100° C gehalten und nach Abkühlung auf übliche Weise aufgearbeitet. Ausbeute: 2,3 g (87% d. Th.)

### Beispiel 4

### 1,2-Di-([cis]-9-octadecanoyl)-sn-glycero-3-phosphocholin

In einem Dreihalskolben mit Rührer, Thermometer und Kühler werden 5 g Ölsäureanhydrid, 1 g Glycerophosphatidylcholin und 1,03 g 4-(N, N'-Dimethylamino)-pyridin gegeben. Das Gemisch wird 6 Stunden bei einer Temperatur von 80° C gehalten und nach Abkühlung auf übliche Weise aufgearbeitet. Ausbeute: 2,4 g (78% d. Th.)

## Patentansprüche

1. Verfahren zur Herstellung von Phosphatidylcholinderivaten durch Umsetzung von Glycerophosphatidylcholin mit mindestens einem Fettsäureanhydrid unter Anwesenheit eines Pyridin-Katalysators, dadurch gekennzeichnet, daß die Reaktion in einer Schmelze aus dem Glycerophosphatidylcholin, dem mindestens einen Fettsäureanhydrid sowie dem Katalysator durchgeführt wird.

2. Verfahren nach Anspruch 1, dadurch gekennzeichnet, daß die Reaktion bei einer Temperatur zwischen 50° C und 120° C, vorzugsweise bei einer Temperatur zwischen 90° C und 110° C, durchgeführt wird.

3. Verfahren nach Anspruch 1 oder 2, dadurch gekennzeichnet, daß als Fettsäureanhydride solche Verbindungen eingesetzt werden, die in ihrer Kohlenwasserstoffkette 6 bis 24 Kohlenstoffatome aufweisen.

4. Verfahren nach einem der vorangehenden Ansprüche, dadurch gekennzeichnet, daß als Fettsäureanhydride solche Verbindungen eingesetzt werden, die eine gesättigte oder ungesättigte Kohlenwasserstoffkette besitzen.

5. Verfahren nach einem der vorangehenden Ansprüche, dadurch gekennzeichnet, daß Fettsäureanhydride von Dicarbonsäuren eingesetzt werden.

6. Verfahren nach einem der vorangehenden Ansprüche, dadurch gekennzeichnet, daß die Reaktion mit einem Gemisch von Fettsäureanhydriden durchgeführt wird.

7. Verfahren nach einem der vorangehenden Ansprüche, dadurch gekennzeichnet, daß das Fettsäureanhydrid, bezogen auf das Glycerophosphatidylcholin, im Überschuß zugegeben wird.

8. Verfahren nach Anspruch 7, dadurch gekennzeichnet, daß die Reaktion des Fettsäureanhydrids mit dem Glycerophosphatidylcholin in einem Massenverhältnis von Fettsäureanhydrid zu Glycerophosphatidylcholin von 8:1 bis 1,6:1, vorzugsweise von 5,3:1 bis 2,5:1, durchgeführt wird.

9. Verfahren nach einem der vorangehenden Ansprüche, dadurch gekennzeichnet, daß als Reaktionszeit eine Stunde bis 10 Stunden, vorzugsweise 3 Stunden bis 6 Stunden, ausgewählt wird.

10. Verfahren nach einem der vorangehenden Ansprüche, dadurch gekennzeichnet, daß als Katalysator ein in para-Stellung substituiertes Pyridinderivat eingesetzt wird.

11. Verfahren nach Anspruch 10, dadurch gekennzeichnet, daß als Pyridinderivat ein 4-(N,N'-Dialkylamino)-pyridin, insbesondere 4-(N,N'-Dimethylamino)-pyridin und/oder 4-(N,N'-Diethylamino)-pyridin, und/oder 4-(1-Pyrrolidinyl)-pyridin eingesetzt wird.

12. Verfahren nach einem der vorangehenden Ansprüche, dadurch gekennzeichnet, daß der Katalysator in einem Massenverhältnis von Glycerophosphatidylcholin zum Katalysator von 1:3 bis 1:0,1, insbesondere von 1:1,5 bis 1:0,75, angewendet wird.

## Claims

1. A method for the preparation of phosphatidylcholine derivatives by reaction of glycerophosphatidylcholine with at least one fatty acid anhydride in the presence of a pyridine catalyst, characterized in that the reaction is performed in a melt consisting of the glycerophosphatidylcholine, the at least one fatty acid anhydride and the catalyst.

2. The method according to claim 1, characterized in that the reaction is performed at a temperature between 50 °C and 120 °C, preferably at a temperature between 90 °C and 110 °C.

3. The method according to claim 1 or 2, characterized in that as fatty acid anhydrides such compounds are used having an aliphatic chain of 6 to 24 carbon atoms.

4. The method according to one of the preceding claims, characterized in that as fatty acid anhydrides such compounds are used having a saturated or unsaturated aliphatic chain.

5. The method according to one of the preceding claims, characterized in that the fatty acid anhydrides are fatty acid anhydrides of dicarboxylic acids.

6. The method according to one of the preceding claims, characterized in that the reaction is performed with a mixture of fatty acid anhydrides.

7. The method according to one of the preceding claims, characterized in that the fatty acid anhydride is added in excess, relative to the amount of glycerophosphatidylcholine.

8. The method according to claim 7, characterized in that the reaction of the fatty acid anhydride with the glycerophosphatidylcholine is performed at a mass ratio of fatty acid anhydride to glycerophosphatidylcholine of 8:1 to 1,6:1, preferably of 5,3:1 to 2,5:1.

9. The method according to one of the preceding claims, characterized in that the reaction time is one hour to 10 hours, preferably 3 hours to 6 hours.

10. The method according to one of the preceding claims, characterized in that the catalyst is a pyridine derivative substituted in para position.

11. The method according to claim 10, characterized in that the pyridine derivative is a 4-(N,N'-dialkylamino)-pyridine, in particular 4-(N,N'-dimethylamino)-pyridine and/or 4-(N,N'-diethylamino)-pyridine and/or 4-(1-pyrrolidinyl)-pyridine.

12. The method according to one of the preceding claims, characterized in that the catalyst is present at a mass ratio of glycerophosphatidylcholine to catalyst of 1:3 to 1:0,1, in particular of 1:1,5 to 1:0,75.

## Revendications

1. Procédé de préparation de dérivés de la phosphatidylcholine par la réaction de la glycérophosphatidylcholine avec au moins un anhydride d'acide gras en présence d'un catalyseur à base de pyridine, caractérisé en ce que l'on entreprend la réaction dans une masse fondue constituée de la glycérophosphatidylcholine, du ou des éventuels anhydrides d'acides gras, ainsi que du catalyseur.

2. Procédé suivant la revendication 1, caractérisé en ce que l'on entreprend la réaction à une température comprise entre 50°C et 120°C, de préférence à une température comprise entre 90°C et 110°C.

3. Procédé suivant la revendication 1 ou 2, caractérisé en ce que, à titre d'anhydrides d'acides gras, on utilise des composés du genre de ceux dont la chaîne hydrocarbonée comporte de 6 à 24 atomes de carbone.

4. Procédé suivant l'une quelconque des revendications précédentes, caractérisé en ce que, à titre d'anhydrides d'acides gras, on utilise des composés du genre de ceux qui possèdent une chaîne hydrocarbonée saturée ou insaturée.

5. Procédé suivant l'une quelconque des revendications précédentes, caractérisé en ce qu'on utilise des anhydrides d'acides gras d'acides dicarboxyliques.

6. Procédé suivant l'une quelconque des revendications précédentes, caractérisé en ce qu'on entreprend la réaction avec un mélange d'anhydrides d'acides gras.

7. Procédé suivant l'une quelconque des revendications précédentes, caractérisé en ce qu'on ajoute l'anhydride d'acide gras en excès par rapport à la glycérophosphatidylcholine.

8. Procédé suivant la revendication 7, caractérisé en ce que l'on entreprend la réaction de l'anhydride d'acide gras avec la glycérophosphatidylcholine en un rapport massique de l'anhydride de l'acide gras à la glycérophosphatidylcholine de 8:1 à 1,6:1, de préférence de 5,3:1 à 2,5:1.

9. Procédé suivant l'une quelconque des revendications précédentes, caractérisé en ce qu'on choisit la durée de la réaction entre 1 heure et 10 heures, de préférence entre 3 heures et 6 heures.

10. Procédé suivant l'une quelconque des revendications précédentes, caractérisé en ce que, à titre de catalyseur, on utilise un dérivé de la pyridine substituée en position para.

11. Procédé suivant la revendication 10, caractérisé en ce que l'on utilise, à titre de dérivé de la pyridine, une 4-(N,N'-dialkylamino)-pyridine, plus particulièrement la 4-(N,N'-diméthylamino)-pyridine et/ou la 4-(N,N'-diéthylamino)-pyridine, et/ou la 4-(1-pyrrolidinyl)-pyridine.

12. Procédé suivant l'une quelconque des revendications précédentes, caractérisé en ce qu'on utilise le catalyseur en un rapport massique de la glycérophosphatidylcholine au catalyseur de 1:3 à 1:0,1, plus particulièrement de 1:1,5 à 1:0,75.
